# EUROPÄISCHE PATENTSCHRIFT

(11) **EP 0 957 531 B1**
(45) Veröffentlichungstag und Bekanntmachung des Hinweises auf die Patenterteilung: **31.10.2001**
(21) Anmeldenummer: 99105063.4
(22) Anmeldetag: 23.03.1999
(51) Int. Cl.: H01Q 3/08, H01Q 1/12, G01S 13/93

(54) **Einrichtung zur Justierung des Strahlenganges eines strahlaussendenden Elementes**
Apparatus for adjusting the path of radiation of a beam radiating element
Appareil d'ajustage de la direction d'un faisceau d'un élément rayonnant

(30) Priorität: 11.05.1998 DE 19820705
(43) Veröffentlichungstag der Anmeldung: 17.11.1999
(73) Patentinhaber: Mannesmann VDO Aktiengesellschaft, 60388 Frankfurt am Main (DE)
(72) Erfinder: Börner, Dietmar, 07743 Jena (DE); Sellner, Volker, 61276 Weilrod (DE)
(74) Vertreter: Klein, Thomas, Dipl.-Ing. (FH)

(56) Entgegenhaltungen:
- DE-C- 4 201 214
- DE-C- 19 642 810
- DE-C- 19 739 298
- PATENT ABSTRACTS OF JAPAN vol. 017, no. 302 (P-1553), 10. Juni 1993 (1993-06-10) & JP 05 027037 A (KANSEI CORP), 5. Februar 1993 (1993-02-05)

## Beschreibung

Die Erfindung betrifft eine Einrichtung zur Justierung des Strahlenganges eines strahlaussenden Elementes gemäß dem Oberbegriff des Patentanspruchs 1.

Aus der DE 19 530 065 A1 ist ein Radarsensor bekannt, mit dessen Hilfe ein oder mehrere sich in der Umgebung eines Fahrzeuges befindende Objekte detektiert werden. Zu diesem Zweck sendet der Radarsensor ein Signal aus, das von den Objekten reflektiert wird. Der reflektierte Strahl wird vom Radarsensor wieder empfangen und in einer Auswerteschaltung ausgewertet. Die Auswerteschaltung errechnet daraus die relative Fahrzeuggeschwindigkeit und den Abstand zu einem detektierten Objekt.

Für den Einsatz in Abstandsregelsystemen eines Kraftfahrzeuges ist es erforderlich, daß die Strahlrichtung des Sensors parallel zur Fahrzeuglängsachse verläuft. Ungenauigkeiten infolge einer falschen Strahlrichtung führen zum Erfassen von für die Regelung nichtrelevanten Objekten. Wird ein falsches Objekt als das zum Fahrzeug am nächsten gelegene erkannt, wird auf dieses Objekt die Abstandsregelung eingestellt, was gefährliche Situationen im Straßenverkehr zur Folge hat.

Gemäß der DE 42 01 214 C1 ist eine gattungsgemäße Einrichtung bekannt, bei welcher die Richtantenne eines Radarsensors gemeinsam mit einem Justierscheinwerfer mittels eine Verstellplatine verstellbar am Fahrzeug angeordnet ist, wobei eine solche Halterung vorgesehen ist, daß eine Verstellbarkeit in verschiedene Richtungen möglich ist.

Bei der Justiereinrichtung gemäß Patent Abstracts of Japan vol. 017, no. 302 (P-1553), 10. Juni 1993 (1993-06-10) sind zwei Laseradareinheiten fest mit einem Scheinwerfer verbunden, wobei diese Vorrichtung über 2 Verstelleinrichtungen unabhängig von einander in zwei Richtungen verstellt werden kann.

Auch bei dem Radarsystem gemäß DE 196 42 810 C1 sind für die Justierung des Sensors 2 Gewindestangen vorgesehen, wobei jede Gewindestange einen Keilschieber zur Justierung des Sensors bewegt.

Der Erfindung liegt somit die Aufgabe zugrunde, eine Einrichtung anzugeben, welche eine einfache, aber genaue Einstellung der Strahlrichtung des strahlaussendenden Elementes am Kraftfahrzeug ermöglicht.

Erfidungsgemäß wird die Aufgabe durch die Merkmale des Kennzeichens des Patenanspruchs 1 gelöst.

Vorteilhafterweise ist jede Justiereinheit in einer Lagereinrichtung gelagert, wobei die Justiereinheit zur Einstellung des Freiheitsgrades an einem Punkt in einem definierten Abstand von einer Drehachse des strahlaussendenden Elementes angreift. Die Lagerung der Justiereinheit erfolgt dabei getrennt von der Drehachse des strahlaussendenden Elementes.

Die Drehachse der ersten Justiereinheit und die Drehachse der zweiten Justiereinheit stehen im Winkel von 90° zueinander.

Vorteilhafterweise verläuft dabei die senkrechte Drehachse des strahlaussendenden Elementes annähernd mittig zu der entsprechenden Ausdehnung des strahlaussendenden Elementes.

Dadurch sind zur Justierung kürzere Stellwege möglich. Insbesondere beim Einsatz in einem Fahrzeug, wo solche Abstandssensoren in die Stoßstange oder den Kühlergrill eingesetzt werden, hat eine solche Einrichtung den Vorteil, daß der Ausschnitt im Fahrzeug, in welchen das strahlaussendende Element eingesetzt wird, aufgrund kürzerer Stellwege kleiner gehalten werden kann.

In einer Ausgestaltung besteht die Verstelleinrichtung aus einem Elementeträger zur Befestigung des strahlaussendenden Elementes und einem Halteteil zur Befestigung des Elementeträgers an der Vorrichtung, wobei der Elementeträger und das Halteteil beweglich miteinander verbunden sind.

Dabei kann das strahlaussendende Element direkt an dem Elementeträger befestigt sein. Dies ist insbesondere dann vorteilhaft, wenn das strahlaussendende Element ein Radarsensor ist und der Elementeträger an der Hornantenne des Sensors befestigt ist.

In einer anderen Ausführung ist das strahlaussendende Element in oder an einem Gehäuse angeordnet, welches wiederum mit dem Elementeträger verbunden ist.
Zur Einstellung des Azimuts weist der Elementeträger eine Öffnung auf, in die ein Gehäusezapfen des Gehäuses eingreift, durch welchen eine Drehachse verläuft, wobei die Justiereinheit kraftschlüssig und/ oder formschlüssig zur Verstellung zwischen Elementeträger und Gehäuse angeordnet ist.

Alternativ dazu greift durch die Öffnung des Elementeträgers eine Zentrierschraube in das Gehäuse ein, wobei die Drehachse in Schraubrichtung verläuft und die Justiereinheit ebenfalls kraft- und/oder formschlüssig zur Verstellung zwischen Elementeträger und Gehäuse angeordnet ist.

Die kraftschlüssige Verbindung wird dadurch erreicht, daß die Justiereinheit in am Gehäuse ausgebildeten Lagern gehalten ist, wobei ein in einer Federaufnahme der Gehäuseoberfläche gelagertes Federelement gegen die Justiereinheit drückt und in die auf der Außenfläche der Justiereinheit ausgebildeten Rastelemente zur schrittweisen Verstellung eingreift. Die Rastelemente haben dabei den Vorteil, daß dem Nutzer der Vorrichtung durch haptische Übertragung mitgeteilt wird, wieviel Justierschritte vollzogen wurden. Gleichzeitig führen diese Rastelemente zur Arretierung der einmal eingestellten Position. Der Abstand der Rastelemente entspricht dabei vorgegebenen Winkelwerten.

Zur Umlenkung der Bewegungsrichtung weist die Justiereinheit an ihrem Umfang einen Bereich auf, welcher exzentrisch zu einer Lagerachse der Justiereinheit verläuft, gegen welchen eine Abwinklung des Elementeträgers der Verstelleinrichtung vorgespannt ist, wobei die Exzenterfläche einen kontinuierlichen Anstieg besitzt.

Eine besonders einfache Montage ist möglich, wenn die aus der Exzenterfläche und den Raststellungen bestehende Justiereinheit einstückig ausgebildet ist.

Zur Einstellung der Elevation greift die schraubenähnlich ausgebildete Justiereinheit durch eine Öffnung des Halteteils der Verstelleinrichtung in eine, durch eine zweite Öffnung des Elementeträgers greifende Aufnahme, wobei in der Öffnung des Halteteiles eine im Inneren Rastaufnahmen aufweisende Rasteinrichtung gelagert ist, welche zentrisch an der der Rasteinrichtung zugewandten Seite der Justiereinheit angeordnete Rastelemente aufnimmt. Solche Schraubeinrichtungen sind einfach herzustellen. Es werden somit konventionell erhältliche Mittel zur Herstellung der Justiereinrichtung verwendet.

In einer Weiterbildung sendet das strahlaussendende Element einen Signalstrahl zur Detektion eines oder mehrerer Objekte aus und empfängt die von den Objekten reflektierten Strahlen wieder.

Eine besonders kompakte Abstandsregeleinheit für die Anwendung im Kraftfahrzeug wird erreicht, wenn neben dem Radarsensor eine Sensorsignalaufbereitungseinrichtung und/oder eine Sensorsignalauswerteeinrichtung und/oder eine Abstandregeleinrichtung in dem Gehäuse angeordnet sind. Dadurch werden Leitungen zwischen den einzelnen Steuer-und Regeleinrichtungen eingespart. Die Montage im Kraftfahrzeug reduziert sich auf den Einbau des die o.g. Schaltungen enthaltenden Gehäuses.

Die Erfindung läßt zahlreiche Ausführungsformen zu. Eine davon soll anhand der in der Zeichnung dargestellten Figuren näher erläutert werden.

Es zeigen:
- Figur 1:: Anordnung der Abstandsregeleinrichtung an einem Kraftfahrzeug,
- Figur 2:: eine erste Verstelleinrichtung mit Sensorgehäuse
- Figur 3:: erste Seitenansicht der Verstelleinheit,
- Figur 4:: Draufsicht auf die mit dem Gehäuse verbundene Stelleinheit,
- Figur 5:: Exzenter,
- Figur 6:: zweite Seitenansicht der Verstelleinheit mit Gehäuseteil,
- Figur 7:: Buchse,
- Figur 8:: Stellschraube.
- Figur 9:: als Gußteil gefertigtes Winkelement
- Figur 10:: eine zweite Verstelleinrichtung am Sensorgehäuse

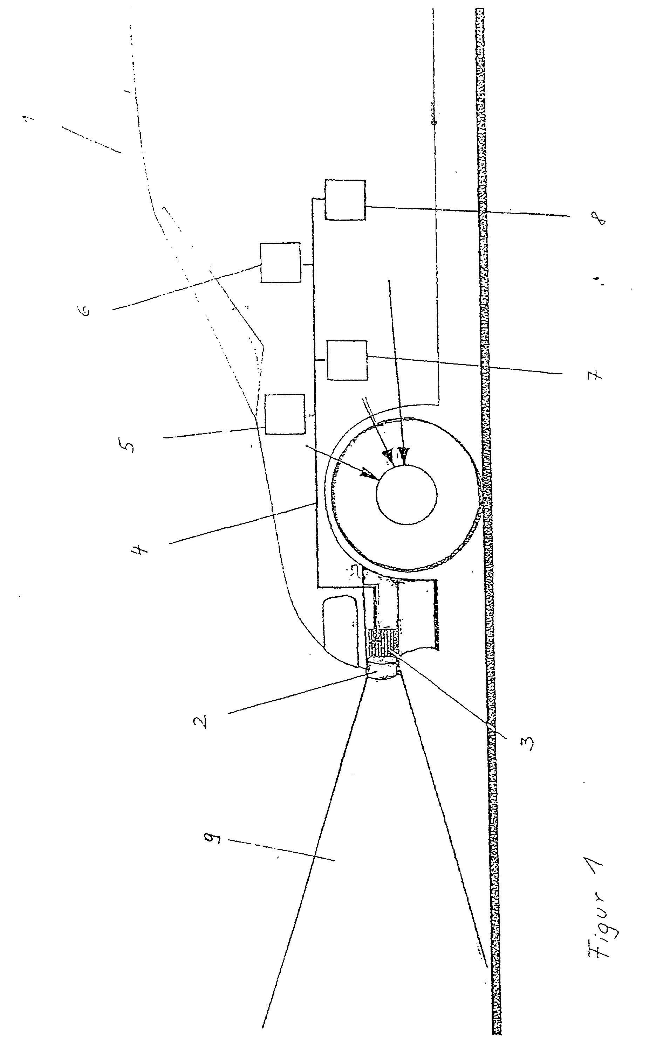

In Figur 1 ist an der Stoßstange 2 eines Kraftfahrzeuges 1 ein automatisches Geschwindigkeits- und Abstandsregelsystem 3 zur Einhaltung des Sicherheitsabstandes von Fahrzeugen angeordnet, welches in einem Gehäuse 10 einen Radarsensor, eine Sensorsignalauswerteschaitung und die Abstandsregeleinrichtung enthält. Über ein im Fahrzeug 1 vorhandenes Bussystem 4 ist das automatische Geschwindigkeits- und Abstandsregelsystem 3 mit der Motorsteuerung 5, der Bremse 7 und dem Getriebe 8 verbunden. Elektronische Befehle regulieren automatisch den Abstand und die Geschwindigkeit des geregelten Fahrzeuges 1, wenn sich dieses an ein langsameres, vorausfahrendes Fahrzeug annähert. Über eine Anzeigeeinheit 6, die ebenfalls von dem Geschwindigkeits- und Abstandsregelsystem 3 über das Bussystem 4, vorzugsweise einen CAN-Bus, angesteuert wird, wird die aktuelle Geschwindigkeit und auch der Abstand zum vorausfahrenden Fahrzeug angezeigt.

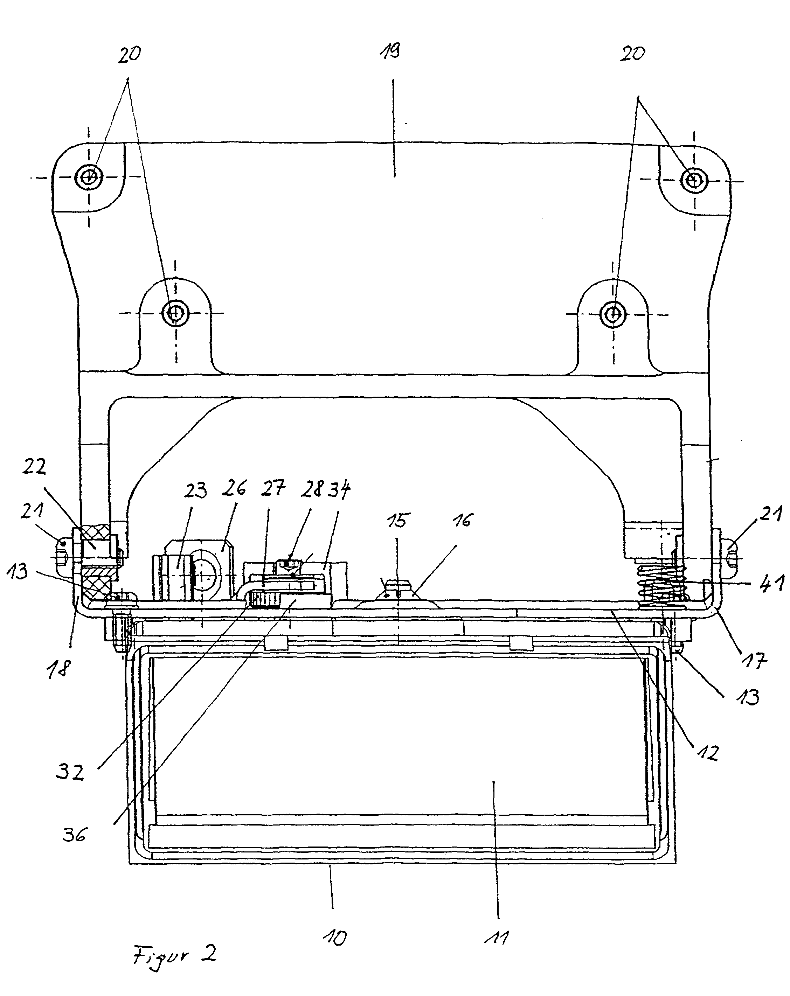

Um den Sensorstrahl 9 des sich in der Abstands- und Regeleinrichtung 3 befindlichen Sensors, welcher nur durch seine auf dem Gehäuse 10 aufliegende, senkrecht zur Fahrtrichtung angeordnete Linse 11 gekennzeichnet ist, genau parallel zur Fahrtrichtung des Kraftfahrzeuges 1 auszurichten, ist das Gehäuse 10 an einer zweiteiligen Verstelleinrichtung angeordnet. (Figur 2) Die Verstelleinrichtung besteht aus einem ebenen Winkelelement 12, das über Schrauben 13 flächig mit der der Verstelleinrichtung zugewandten Oberfläche 14 des Gehäuses 10 verbunden ist.

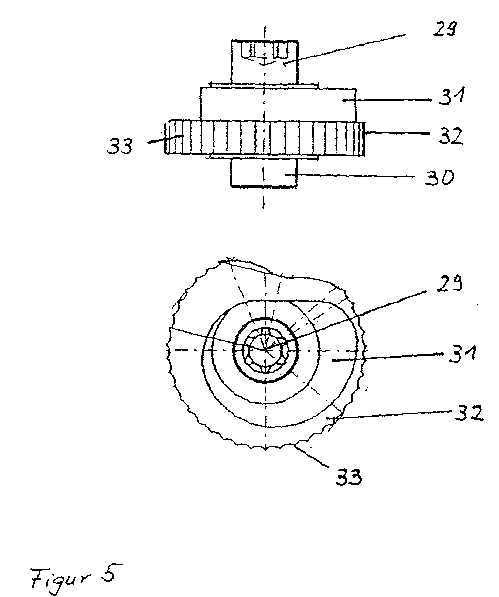

Das Winkelelement 12 überstreicht das Sensorgehäuse 10 in seiner gesamten Querausdehnung. Das Winkelelement weist dabei je ein Langloch 13a in jedem äußeren Bereich seiner Querausdehnung auf, in welches je eine Schraube 13 eingreift. Vor dem Justiervorgang werden diese beiden Schrauben 13 gelockert. Während der Justierung ändert sich die Position jeder Schraube 13 zum Langloch 13a. Nach Abschluß der Justage werden die Schrauben 13 wieder angezogen. (Figur 4)

Ein mittig auf der Gehäuseoberfläche 14 angeordneter Gehäusezapfen 15 greift in eine Mutter 16 des Winkelelementes 12 ein, um welche das Gehäuse 10 mit einer später noch zu beschreibenden Vorrichtung um eine Achse senkrecht zur Fahrtrichtung des Kraftfahrzeuges 1 drehbar gelagert ist.

Das Winkelelement 12 besitzt an seinen über die Gehäusequerausdehnung hinausragenden Enden jeweils eine rechtwinklige Abkröpfung 17, 18, an welcher ein flächig gestalteter Halter 19 angeordnet ist, mittels welchem die gesamte Vorrichtung am nicht weiter dargestellten Kraftfahrzeug über Schraubverbindungen 20 befestigt wird.

Die Befestigung des Halters 19 an den Abkröpfungen 17, 18 erfolgt gelenkig z.B. über Schrauben 21, wobei jede Schraube 21 in eine Buchse 22 eingeschraubt wird, welche unlösbar in den Halter 19 eingelegt ist. Die Schraubrichtung verläuft dabei parallel zur Ausdehnungsrichtung des Winkelelementes 12 über der Gehäusequerausdehnung und einer Drehachse der Vorrichtung.

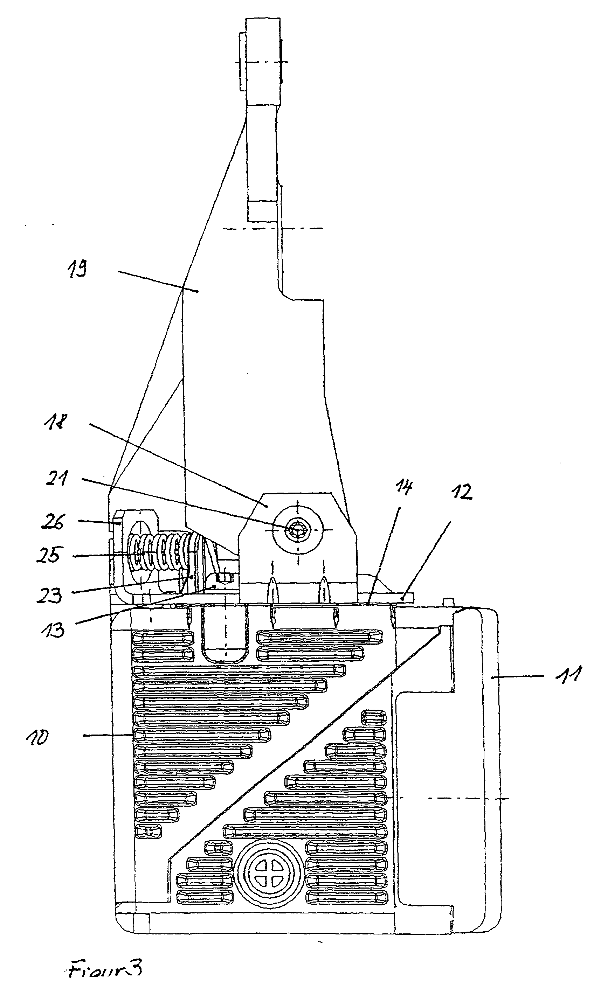

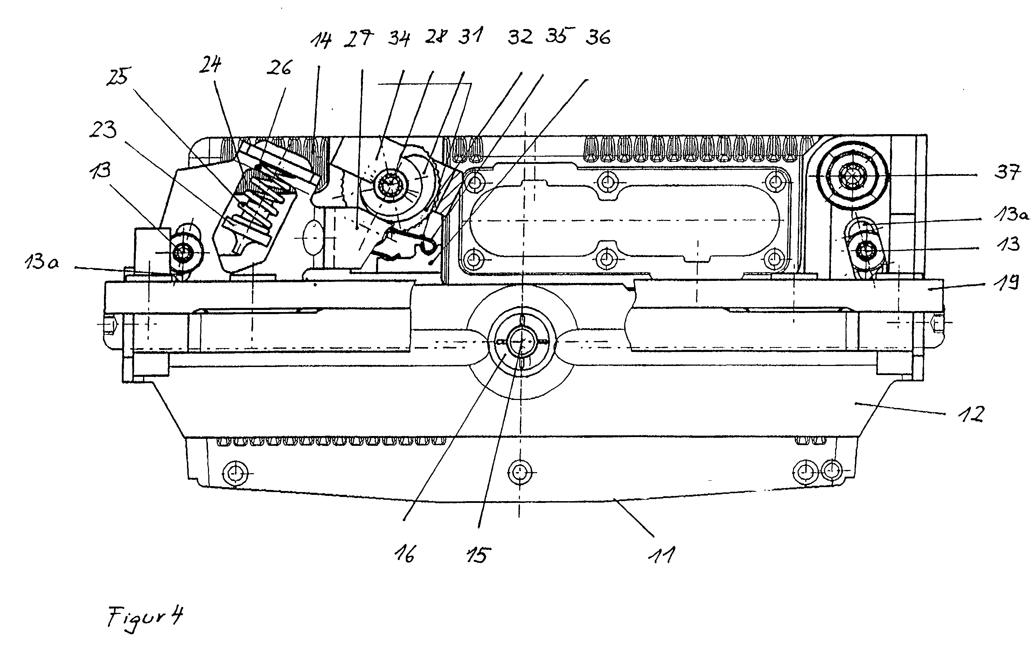

Um den Azimut verstellen zu können, greift eine erste, am Sensorgehäuse 10 angeordnete Federaufnahme 23 durch ein weiteres Langloch 24 des Winkelelementes 12. Über eine in die Federaufnahme 23 eingelegte Druckfeder 25 drückt diese gegen eine Abwinklung 26 des Winkelelementes 12. Entsprechend dieser Anpreßkraft wird eine zweite, zweifach um 90° gekröpfte Abwinklung 27 gegen einen Exzenter 28 gehalten. (Figur 3 und 4).

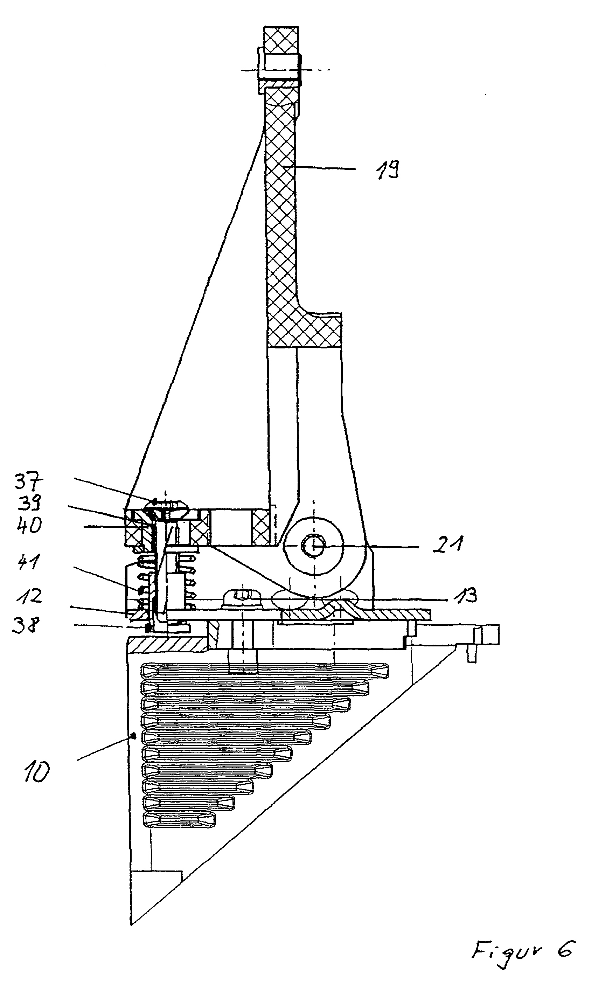

Der Aufbau des Exzenters 28 ist in Figur 5 näher beschrieben. Der Exzenter 28 ist einstückig ausgebildet und weist an seinen äußeren Enden jeweils zwei Lagerzapfen 29 und 30 auf, zwischen denen sich eine als archimedische Spirale ausgebildete Exzenterfläche 31 umlaufend befindet. Diese Exzenterfläche 31 weist eine definierte Steigung auf. Unterhalb der Exzenterfläche 31 ist ein kreisförmiger Rastkranz 32 angeordnet. Der Rastkranz 32 besitzt in gleichmäßigen Winkelabständen Rastnasen 33 zur genauen Einstellung des Azimuts (vgl. Figur 5, Draufsicht).

Der so gestaltete Exzenter 28 greift mit seinen Lagerzapfen 29 und 30 in ein auf der Gehäuseoberfläche 14 des Gehäuses 10 angeordnetes Lager 34 ein. Über eine Feder 35, die von einer Federaufnahme 36, welche ebenfalls am Gehäuse 10 angeordnet ist und von dem Winkelelelement umgriffen wird, wird die erreichte Position des Exzenters 28 arretiert. So kann der einmal eingestellte Winkel nicht weiter durch Erschütterungen während der Fahrt dejustiert werden. Mittels des Rastkranzes 32 kann der Winkel in definierten Abständen (z.B. 0,2°) verändert werden.

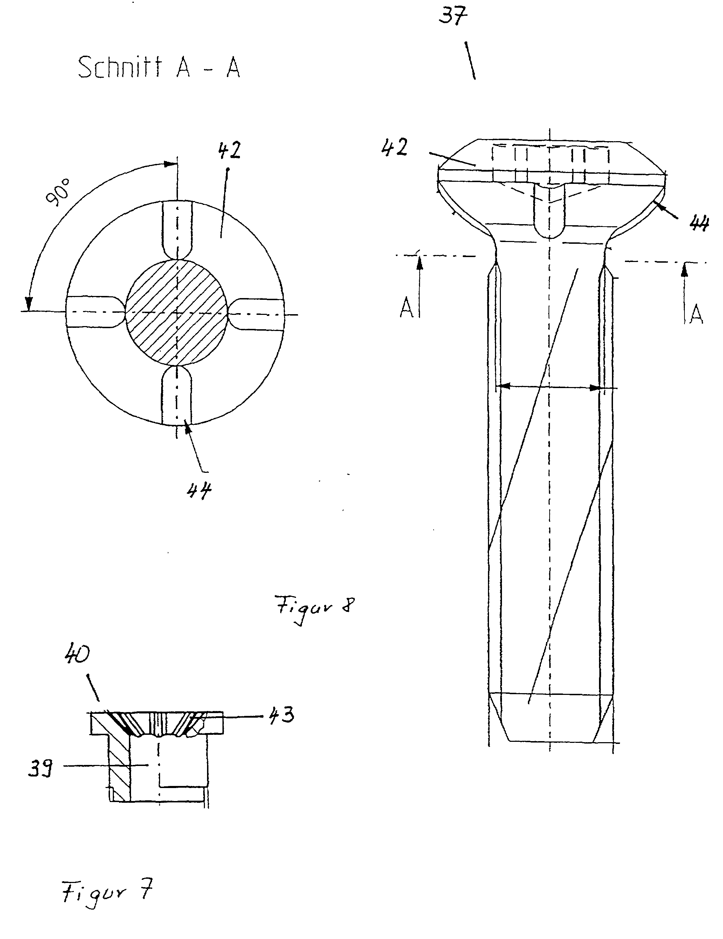

Figur 6 zeigt die zweite Seitenansicht der mit dem Gehäuse 10 verbundenen Verstelleinrichtung. Mittels der in dieser Figur gezeigten federvorgespannten Schraubeinrichtung ist das Sensorgehäuse 10 um eine horizontale Achse senkrecht zur Fahrtrichtung schwenkbar. Eine Justierschraube 37 greift in eine durch das Winkelelement 12 hindurchgesteckte Pendelmutter 38. Dabei ist im Halter 19 eine Schraubenaufnahme 40 in Form einer Buchse fest mit dem Halter 19 verbunden. Die Justierschraube 37 ist dabei von einer zwischen Halter 19 und Winkelelement 12 angeordneten zweiten Druckfeder 41 umgeben, welche den Halter 19 gegen den Schraubenkopf 42 preßt.

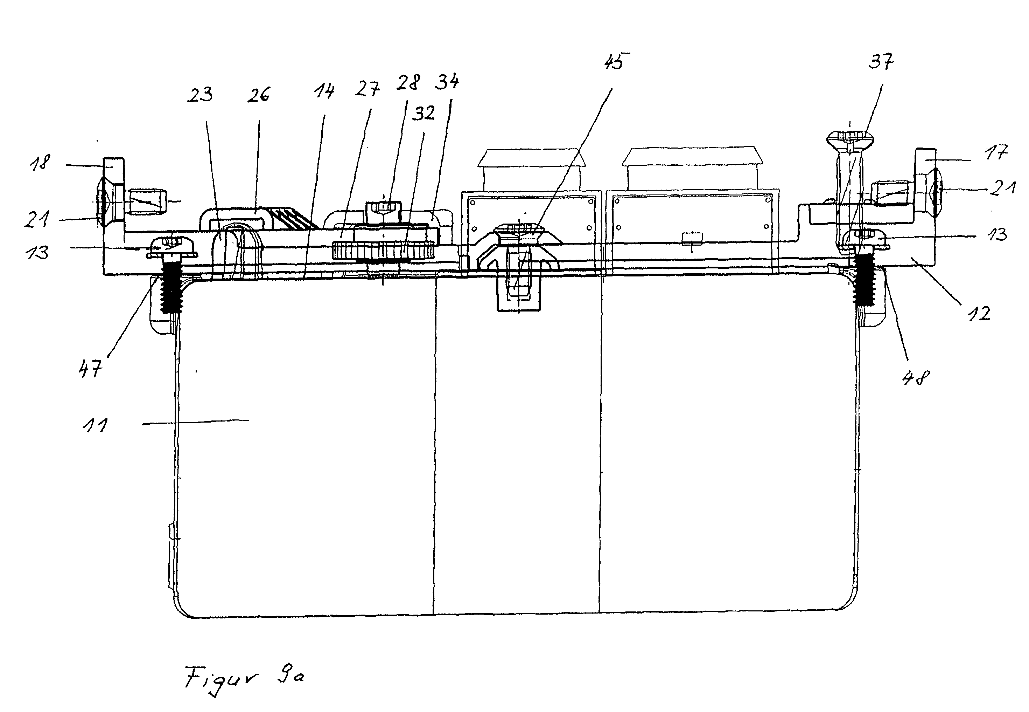

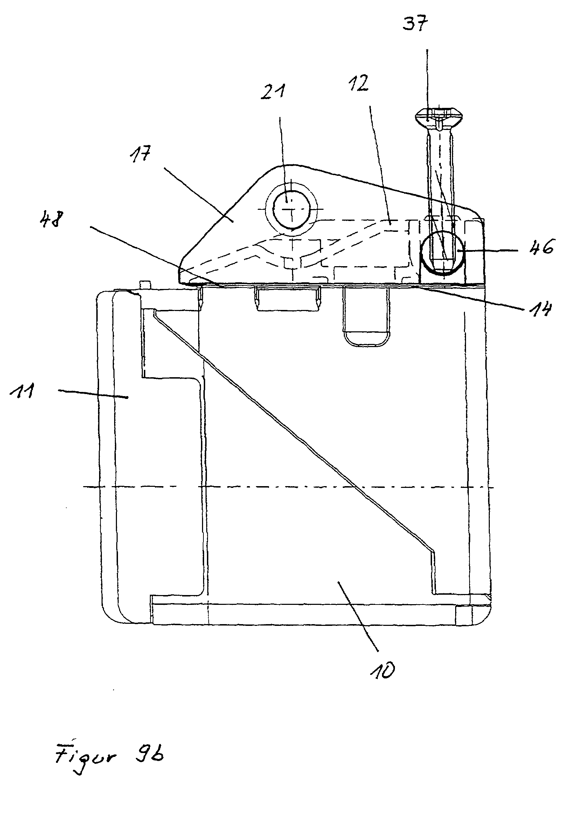

Wie aus Figur 7 ersichtlich, weist die Schraubenaufnahme 40 an ihrer Innenwandung Rastaufnehmungen 43 in gleichmäßigen Abständen auf. Die Schraube 37 ist in Figur 8 dargestellt. Es handelt sich dabei um eine Senkkopfschraube, die an der Unterseite ihres Kopfes 42 vier im 90°-Abstand angeordnete Rippen 44 aufweist.

Diese Rippen 44 greifen bei der Betätigung der Justierschraube 37 in die Rastaufnehmungen der Schraubenaufnahme 40 ein. Mittels dieser Anordnung wird der Elevationswinkel eingestellt.

So kann der einmal eingestellte Winkel nicht weiter durch Erschütterungen während der Fahrt des Kraftfahrzeuges dejustiert werden. Mittels der Rastaufnehmungen 43 kann der Winkel auch bei dieser Justiereinheit in definierten °-Abständen verändert werden.

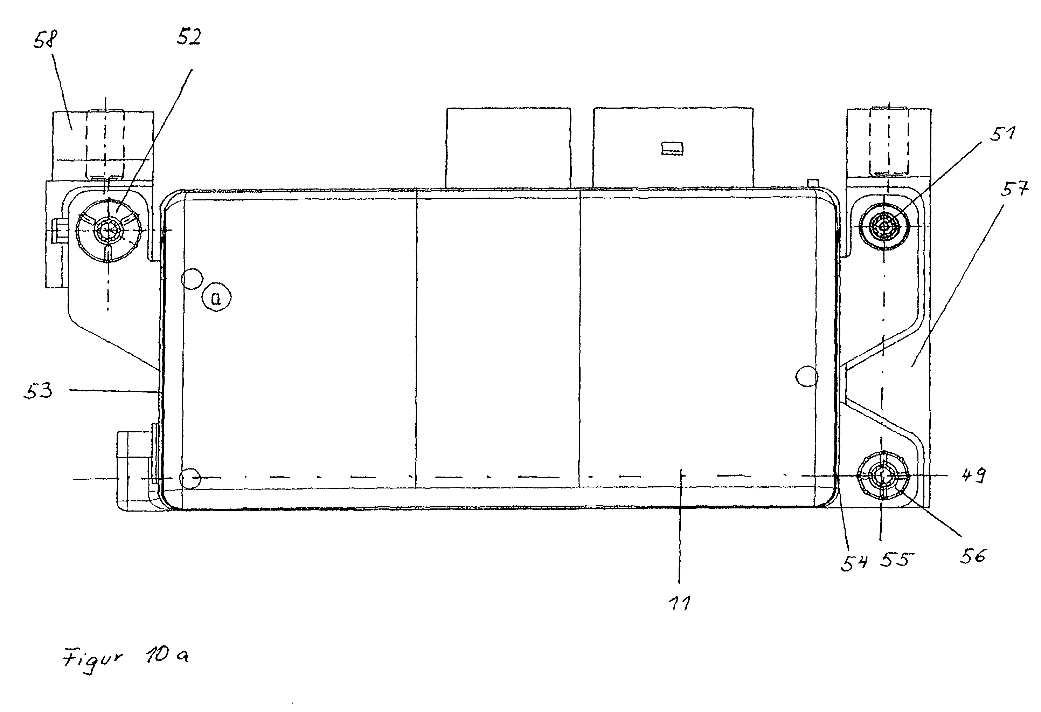

In Figur 9a ist ein als Gußteil ausgebildetes Winkelelement 12 dargestellt, in dessen Mitte anstelle des Gehäusezapfens 15 eine Zentrierschraube 45 durch das Winkelelement 12 hindurch in das Gehäuse 10 eingreift.

Wie in Figur 9b dargestellt, greift bei dieser Ausführung die Justierschraube 37 in einen ein Innengewinde aufweisenden Zylinder 46 ein, welcher vollständig innerhalb des Winkelelementes 12 senkrecht zur Drehachse ausgebildet ist und die Pendelmutter 38 ersetzt. Der Wegfall der Pendelmutter 38 ermöglicht die Ausbildung einer glatten Auflagefläche des Winkels 12 auf der Oberfläche 14 des Gehäuses 10.

Eine sichere Auflage des Winkelelementes 12 wird insbesondere dadurch erreicht, daß an jeder der Gehäuseoberfläche 14 gegenüberliegenden Schmalseite des Winkelelementes 12 ein Auflagebereich 47, 48 ausgebildet ist. Mit Hilfe dieser Mehrpunktauflage des Winkelelementes 12 auf der Gehäuseoberfläche 14 wird sichergestellt, daß bei Vibrationen des Kraftfahrzeuges eine feste Auflage des Winkelelementes 12 auf dem Gehäuse 10 gewährleistet ist.

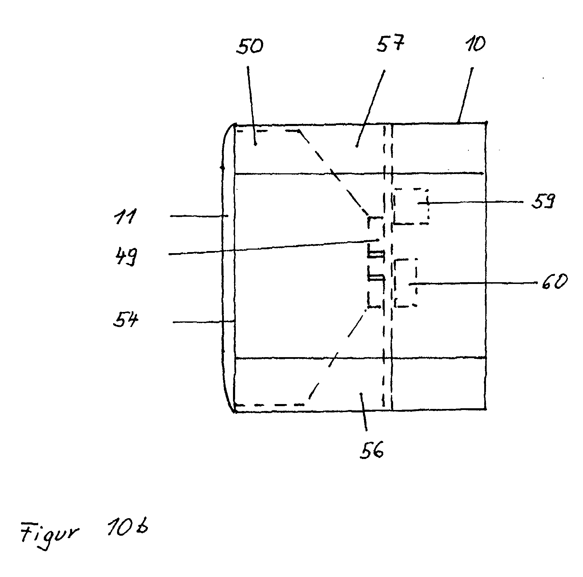

In Figur 10 ist eine andere Ausführung der Verstelleinrichtung dargestellt. Diese Verstelleinrichtung ist am Gehäuse 10 des Radarsensors angeordnet, welcher mit der in dieser Figur nicht weiter dargestellten Linse 11 zur Bündelung der Radarstrahlen abgedeckt wird.
An jeder schmalen Außenseite 53, 54 des Gehäuses 10 ist je eine Justiereinheit 51, 52 angebracht, die einen ähnlichen Aufbau besitzen, welcher im Zusammenhang mit den Figuren 6 und 7 erläutert wurde.
Die Azimutwinkeleinstellung erfolgt durch die Justiereinheit 52, wobei das Gehäuse 10 um die Achse 49 des Gehäuses 10 gedreht wird.

Zur Einstellung der Elevationswinkels ist die zweite Justiereinheit 51 oberhalb des Lagerpunktes 56 an der Außenseite 54 des Gehäuses 10 angeordnet. Bei Betätigung der Rastschraube der Justiereinheit 51 wird das Gehäuse 10 um die Achse 55 geschwenkt.

Die Justiereinheiten 51, 52 sind jeweils in eine, am Gehäuse 10 angeordneten Aufnahme 57, 58 eingebracht. Auf Grund dieser einfachen Ausgestaltung ist der Halter 19 beliebig an den Aufnahmen 57, 58 anbringbar. Die Justiereinheiten 57, 58 sind einfach von vorn zu betätigen.

Wie Figur 10b in der Seitenansicht der eben erläuterten Einrichtung dargestellt. Hier wird verdeutlicht , daß der Radarsensor neben der Linse 11 eine hornähnliche Antenne 50 und eine Mikrowelleneinheit 61 aufweist. Die Mikrowelleneinheit 61 ist elektrisch mit einer Sensorsignalerzeugungs- und auswerteschaltung 59 sowie der Abstandsregeleinrichtung 60 verbunden, die ebenfalls im Gehäuse 10 angeordnet sind.

Die Erfindung eignet sich nicht nur für die den beschriebenen Fall der Justage eines Sensors. So ist auch eine genaue Einstellung von Scheinwerfern oder ähnlichen Einrichtungenmit Hilfe der erfindungsgemäßen Einrichtung vorstellbar.

## Patentansprüche

1. Einrichtung zur Justierung des Strahlenganges eines strahlaussendenden Elementes an einer Vorrichtung, insbesondere einem Kraftfahrzeug, wobei das strahlaussendende Element (11, 49, 50) über eine Verstelleinrichtung (12,19) an der Vorrichtung (1) befestigt ist und die Verstelleinrichtung (12,19) zur unabhängigen Verstellung von mindestens zwei Freiheitsgraden für jeden einzustellenden Freiheitsgrad eine Justiereinheit (28, 37, 51,52) aufweist, **dadurch gekennzeichnet, daß** jede Justiereinheit (28, 37, 51, 52) Rastelemente (33, 44) zur schrittweisen Verstellung aufweist.

2. Einrichtung nach Anspruch 1, **dadurch gekennzeichnet, daß** jede Justiereinheit (28,37) in einer Lagereinrichtung (34, 38) gelagert ist und an einem Punkt in definiertem Abstand von einer Drehachse des strahlaussendenden Elementes (11,50) angreiff.

3. Einrichtung nach Anspruch 2 **dadurch gekennzeichnet, daß** die Drehachse der ersten Justiereinheit (28) und die Drehachse der zweiten Justiereinheit (37) im Winkel von 90° zueinander stehen.

4. Einrichtung nach Anspruch 2 oder 3, **dadurch gekennzeichnet, daß** die senkrechte Drehachse des strahlaussendenden Elementes (11, 49, 50) annähernd mittig zu der entsprechenden Ausdehnung des Elementes (11) verläuft.

5. Einrichtung nach Anspruch 1, 2, 3 oder 4 **dadurch kennzeichnet, daß** die Verstelleinrichtung aus einem Elementeträger (12) zur Befestigung des strahlaussendenden Elementes (11) und einem Halteteil (19) zur Befestigung des Elementeträgers (12) an der Vorrichtung (1) besteht, wobei der Elementeträger (12) und das Halteteil (19) beweglich miteinander verbunden sind.

6. Einrichtung nach Anspruch 5 **dadurch gekennzeichnet, daß** das strahlaussendende Element (50) direkt an dem Elementeträger (57,58) befestigt ist.

7. Einrichtung nach Anspruch 6 **dadurch gekennzeichnet, daß** das strahlaussendende Element (11) ein Radarsensor ist und der Elementeträger (57,58) an einer Hornantenne (50) des Sensors befestigt ist.

8. Einrichtung nach Anspruch 5 **dadurch gekennzeichnet, daß** das strahlaussendende Element (11, 49, 50) in oder an einem Gehäuse (10) angeordnet ist.

9. Einrichtung nach Anspruch 8 **dadurch gekennzeichnet, daß** der Elementeträger (12) eine Öffnung (16) aufweist, in die ein Gehäusezapfen (15) des Gehäuses (10) eingreift, durch welchen eine Drehachse verläuft, und die Justiereinheit (28) kraftschlüssig und/oder formschlüssig zur Verstellung zwischen Elementeträger (12) und Gehäuse (10) angeordnet ist.

10. Einrichtung nach Anspruch 8 **dadurch gekennzeichnet, daß** durch die Öffnung (16) des Elementeträgers (12) eine Zentrierschraube (45) in das Gehäuse (10) eingreift, wobei die Drehachse in Schraubrichtung verläuft und die Justiereinheit (28) kraftschlüssig und /oder formschlüssig zur Verstellung zwischen Elementeträger (12) und Gehäuse (10) angeordnet ist.

11. Einrichtung nach Anspruch 9 oder 10, **dadurch gekennzeichnet, daß** die Justiereinheit (28) in am Gehäuse (10) ausgebildeten Lagern (34) gehalten ist, wobei ein in einer Federaufnahme (36) der Gehäuseoberfläche (14) gelagertes Federelement (35) gegen die Justiereinheit (28) vorgespannt ist und in auf der Außenfläche der Justiereinheit (28) ausgebildete Rastelemente (33) zur schrittweisen Verstellung eingreift.

12. Einrichtung nach Anspruch 11, **dadurch gekennzeichnet, daß** die Justiereinheit (28) an ihrem Umfang einen Bereich (31) aufweist, der exzentrisch zu einer Lagerachse der Justiereinheit (28) verläuft, und eine Abwinklung (27) des Elementeträgers (12) gegen die Exzenterfläche (31) vorgespannt ist, wobei die Exzenterfläche (31) einen kontinuierlichen Anstieg besitzt.

13. Einrichtung nach Anspruch 11 und 12, **dadurch gekennzeichnet, daß** die aus Exzenterfläche (31) und Rastelementen (33) bestehende Justiereinrichtung (28) einstückig ausgebildet ist.

14. Einrichtung nach Anspruch 5 **dadurch gekennzeichnet, daß** die schraubenähnlich ausgebildete Justiereinheit (37) durch eine Öffnung (39) des Halteteils (19) der Verstelleinrichtung in eine am Elementeträger (12) abgeordneten Aufnahme (38) eingreift, wobei in der Öffnung (39) des Halteteils (19) eine im Inneren Rastaufnahmen (43) aufweisende Rasteinrichtung (40) gelagert ist, welche zentrisch an der der Rasteinrichtung (40) zugewandten Seite der Justiereinheit (37) angeordnete Rastelemente (33) aufnimmt.

15. Einrichtung nach Anspruch 1 **dadurch gekennzeichnet, daß** das strahlaussendende Element einen Signalstrahl zur Detektion eines oder mehrerer Objekte aussendet und wieder empfängt.

16. Einrichtung nach Anspruch 1 und 15 **dadurch gekennzeichnet, daß** in dem Gehäuse (10) eine Sensorsignalaufbereitungseinrichtung und eine Sensorsignalauswerteeinrichtung (59) und/oder eine Abstandsregeleinrichtung (60)angeordnet sind.

## Claims

1. Apparatus for adjusting the beam path of a beam-emitting element on a device, in particular a motor vehicle, the beam-emitting element (11, 49, 50) being fastened on the device (1) via an adjusting device (12, 19), and the adjusting device (12, 19) having for the purpose of independently adjusting at least two degrees of freedom an adjusting unit (28, 37, 51, 52) for each degree of freedom to be set, **characterized in that** each adjusting unit (28, 37, 51, 52) has latching elements (33, 44) for stepwise adjustment.

2. Apparatus according to Claim 1, **characterized in that** each adjusting unit (28, 37) is mounted in a bearing device (34, 38) and acts at a point at a defined distance from an axis of rotation of the beam-emitting element (11, 50).

3. Apparatus according to Claim 2, **characterized in that** the axis of rotation of the first adjusting unit (28) and the axis of rotation of the second adjusting unit (37) are at an angle of 90° to one another.

4. Apparatus according to Claim 2 or 3, **characterized in that** the vertical axis of rotation of the beam-emitting element (11, 49, 50) runs approximately centrally relative to the corresponding extent of the element (11).

5. Apparatus according to Claim 1, 2, 3 or 4, **characterized in that** the adjusting device comprises an element support (12) for fastening the beam-emitting element (11), and a holding part (19) for fastening the element support (12) on the device (1), the element support (12) and the holding part (19) being movably connected to one another.

6. Apparatus according to Claim 5, **characterized in that** the beam-emitting element (50) is fastened directly on the element support (57, 58).

7. Apparatus according to Claim 6, **characterized in that** the beam-emitting element (11) is a radar sensor, and the element support (57, 58) is fastened on a horn antenna (50) for the sensor.

8. Apparatus according to Claim 5, **characterized in that** the beam-emitting element (11, 49, 50) is arranged in or on a housing (10).

9. Apparatus according to Claim 8, **characterized in that** the element support (12) has an opening (16) in which there engages a journal (15) of the housing (10) through which an axis of rotation runs, and the adjusting unit (28) is arranged in a force-closed and/or self-closed fashion for the purpose of adjustment between the element support (12) and housing (10).

10. Apparatus according to Claim 8, **characterized in that** a centring screw (45) engages in the housing (10) through the opening (16) of the element support (12), the axis of rotation running in the screwing direction, and the adjusting unit (28) being arranged in a force-closed and/or self-closed fashion for the purpose of adjustment between the element support (12) and housing (10).

11. Apparatus according to Claim 9 or 10, **characterized in that** the adjusting unit (28) is held in bearings (34) constructed on the housing (10), a spring element (35) mounted in a spring receptacle (36) on the housing surface (14) being biased against the adjusting unit (28) and engaging for the purpose of stepwise adjustment in latching element (33) constructed on the outer surface of the adjusting unit (28).

12. Apparatus according to Claim 11, **characterized in that** the adjusting unit (28) has on its circumference a region (31) which runs eccentrically as to a bearing axis of the adjusting unit (28), and an angular part (27) of the element support (12) is biased against the eccentric surface (31), the eccentric surface (31) having a continuous gradient.

13. Apparatus according to Claims 11 and 12, **characterized in that** the adjusting unit (28) comprising the eccentric surface (31) and latching elements (33) is constructed in one piece.

14. Apparatus according to Claim 5, **characterized in that** the adjusting unit (37), of screw-like construction engages in a receptacle (38) arranged on the element support (12) through an opening (39) of the holding part (19) of the adjusting device, there being mounted in the opening (39) of the holding part (19) a latching device (40) which has latching receptacles (43) in the interior and which accommodate latching elements (33) arranged centrally on the side of the adjusting unit (37) facing the latching device (40).

15. Apparatus according to Claim 1, **characterized in that** the beam-emitting element emits a signalling beam for detecting one or more objects and receives it again.

16. Apparatus according to Claims 1 and 15, **characterized in that** arranged in the housing (10) are a sensor signal conditioning device and a sensor signal evaluating device (59) and/or a distance regulating device (60).

## Revendications

1. Appareil d'ajustage de la direction d'un faisceau d'un élément rayonnant sur un dispositif, notamment un véhicule automobile, l'élément rayonnant (11, 49, 50) étant fixé au dispositif (1) par le biais d'un appareil de positionnement (12, 19) et l'appareil de positionnement (12, 19) présentant une unité d'ajustage (28, 37, 51, 52) pour chaque degré de liberté pour le positionnement indépendant d'au moins quatre degrés de liberté, **caractérisé en ce que** chaque unité d'ajustage (28, 37, 51, 52) présente des éléments d'encliquetage (33, 44) pour un positionnement pas à pas.

2. Appareil selon la revendication 1, **caractérisé en ce que** chaque unité d'ajustage (28, 37) est logée dans un dispositif de logement (34, 38) et intervient en un point qui se trouve à une distance donnée d'un axe de rotation sur l'élément rayonnant (11, 50).

3. Appareil selon la revendication 2, **caractérisé en ce que** l'axe de rotation de la première unité d'ajustage (28) et l'axe de rotation de la deuxième unité d'ajustage (37) se trouvent à un angle de 90° l'un par rapport à l'autre.

4. Appareil selon la revendication 2 ou 3, **caractérisé en ce que** l'axe vertical de l'élément rayonnant (11, 49, 50) s'étend pratiquement au centre de l'élargissement correspondant de l'élément (11).

5. Appareil selon la revendication 1, 2, 3 ou 4, **caractérisé en ce que** l'appareil de positionnement se compose d'un porte-élément (12) pour fixer l'élément rayonnant (11) et d'une pièce de maintien (19) pour fixer le porte-élément (12) au dispositif (1), le porte-élément (12) et la pièce de maintien (19) étant reliés entre eux de manière mobile.

6. Appareil selon la revendication 5, **caractérisé en ce que** l'élément rayonnant (50) est fixé directement au porte-élément (57, 58).

7. Appareil selon la revendication 6, **caractérisé en ce que** l'élément rayonnant (11) est un capteur radar et le porte-élément (57, 58) est fixé à une antenne en cornet (50) du capteur.

8. Appareil selon la revendication 5, **caractérisé en ce que** l'élément rayonnant (11, 49, 50) est disposé dans ou sur un boîtier (10).

9. Appareil selon la revendication 8, **caractérisé en ce que** le porte-élément (12) présente une ouverture (16) dans laquelle pénètre un tenon de boîtier (15) du boîtier (10) à travers lequel passe un axe de rotation et l'unité d'ajustage (28) est logée par engagement gravitationnel et/ou géométrique entre le porte-élément (12) et le boîtier (10) pour effectuer le positionnement.

10. Appareil selon la revendication 8, **caractérisé en ce qu'**une vis de centrage (45) pénètre dans le boîtier (10) à travers l'ouverture (16) dans le porte-élément (12), l'axe de rotation s'étendant dans le sens du vissage et l'unité d'ajustage (28) est logée par engagement gravitationnel et/ou géométrique entre le porte-élément (12) et le boîtier (10) pour effectuer le positionnement.

11. Appareil selon la revendication 9 ou 10, **caractérisé en ce que** l'unité d'ajustage (28) est maintenue dans des paliers (34) façonnés sur le boîtier (10), un élément ressort (35) logé dans un logement de ressort (36) de la surface du boîtier (14) étant précontraint contre l'unité d'ajustage (28) et pénètre dans les éléments d'encliquetage (33) façonnés sur la surface extérieure de l'unité d'ajustage (28) pour réaliser un positionnement pas à pas.

12. Appareil selon la revendication 11, **caractérisé en ce que** l'unité d'ajustage (28) présente sur son pourtour une zone (31) qui s'étend de manière excentrique par rapport à un axe support de l'unité d'ajustage (28) et un coude (27) du porte-élément (12) est précontraint contre la surface excentrique (31), la surface excentrique (31) possédant un accroissement constant.

13. Appareil selon les revendications 11 et 12, **caractérisé en ce que** l'appareil d'ajustage (28) composé de la surface excentrique (31) et des éléments d'encliquetage (33) est réalisé d'un seul bloc.

14. Appareil selon la revendication 5, **caractérisé en ce que** l'unité d'ajustage (37) réalisée dans une forme similaire à une vis pénètre dans un logement (38) aménagé sur le porte-élément (12) à travers une ouverture (39) de la pièce de maintien (19) de l'appareil de positionnement, un dispositif d'encliquetage (40) qui présente à l'intérieur des logements d'encliquetage (43) étant logé dans l'ouverture (39) de la pièce de maintien (19), lequel dispositif d'encliquetage (40) reçoit les éléments d'encliquetage (33) disposés de manière centrée sur le côté de l'unité d'ajustage (37) opposé au dispositif d'encliquetage (40).

15. Appareil selon la revendication 1, **caractérisé en ce que** l'élément rayonnant émet et reçoit de nouveau un rayon de signal pour détecter un ou plusieurs objets.

16. Appareil selon les revendications 1 et 15, **caractérisé en ce qu'**un appareil de conditionnement du signal du capteur et un appareil d'interprétation du signal du capteur (59) et/ou un appareil de régulation de distance (60) sont disposés dans le boîtier (10).
